Europäisches Patentamt

European Patent Office

Office européen des brevets

(19)

(11) Veröffentlichungsnummer : **0 129 116**
**B1**

(12) **EUROPÄISCHE PATENTSCHRIFT**

(45) Veröffentlichungstag der Patentschrift :
11.11.87

(51) Int. Cl.⁴ : **B 23 B 29/034**, B 23 B 51/10

(21) Anmeldenummer : **84106157.5**

(22) Anmeldetag : **30.05.84**

(54) Vorwärts- und Rückwärts-Fräswerkzeug.

(30) Priorität : **10.06.83 DE 3321111**

(43) Veröffentlichungstag der Anmeldung :
**27.12.84 Patentblatt 84/52**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
**DE-A- 2 354 496**
**DE-C-  859 849**
**FR-A- 2 234 949**
**GB-A- 1 090 350**
**GB-A- 1 386 071**

(73) Patentinhaber : **Heule, Heinrich**
**Kristallstrasse 6**
**CH-9434 Au (CH)**

(72) Erfinder : **Heule, Heinrich**
**Kristallstrasse 6**
**CH-9434 Au (CH)**

(74) Vertreter : **Riebling, Günter, Dr. et al**
**Patentanwälte Dr.-Ing., Dipl.-Ing., Ing.(grad) Günter**
**Riebling Dr.-Ing., Dipl.-Ing. Peter Riebling Rennerie**
**10 Postfach 3160**
**D-8990 Lindau (Bodensee) (DE)**

EP 0 129 116 B1

**Beschreibung**

Die Erfindung betrifft ein Fräswerkzeug mit in axialer Vorwärts- und Rückwärtsrichtung gehender Vorschubbewegung zum Anbringen von Planflächen vergrößerten Durchmessers im Bereich von Durchgangsbohrungen mit einem über einen Schaft drehantreibbaren Werkzeugkopf, der zwei radial nach außen weisende in einem Aufnahmeschlitz angeordnete Schneidkörper aufweist, die in der einen Drehrichtung des Werkzeuges ihren größten radialen Abstand von der Mittenlängsachse und in der anderen Drehrichtung ihren kleinsten radialen Abstand von der Mittenlängsachse aufweisen.

Ein eingangs genanntes Fräswerkzeug ist mit der DE-A 23 54 496 bekannt geworden. Zweck eines solches Fräswerkzeug ist es, Planflächen vergrößerten Durchmessers an der Vorder- und Rückseite von Durchgangsbohrungen anzubringen.

Das bekannte Fräswerkzeug besteht aus einem Schaft, an dessen Stirnseite ein radialer Aufnahmeschlitz angeordnet ist, in dem ein in radialer Richtung schwenkbarer Schneidkörper eingesetzt ist. Der Schneidkörper kann beim Drehantrieb des Fräswerkzeuges in der einen Drehrichtung aus dem Aufnahmeschlitz herausgeklappt werden, so daß er die geforderte Planfläche fräst, während in der anderen Drehrichtung der Schneidkörper in den Aufnahmeschlitz zurückklappt und die Durchgangsbohrung ohne Anbringung einer Anfräsung durchfahren werden kann.

Bei diesem bekannten Werkzeug wird vorausgesetzt, daß die für die Einklappung des Messers vorgesehene Ausnehmung im Werkzeugkörper immer stets frei von Spänen ist, damit das Einklappen des Messers überhaupt gewährleistet ist. Damit ist die Verwendung des Werkzeuges auf CNC-Maschinen in Frage gestellt, weil das Ein- und Ausklappen der Messer nicht immer gelingt.

Im übrigen kann eine hohe Präzision nicht immer erreicht werden, weil der Schneidkörper einerseits drehbar gelagert sein muß, andererseits beim Rückwärtsfräsvorgang jedoch hohen Drücken ausgesetzt ist.

Die vorliegende Erfindung hat sich die Aufgabe gestellt, ein Fräswerkzeug der eingangs genannten Art so weiterzubilden, daß es betriebssicher arbeitet und eine höhere Lebensdauer bei geringeren Kosten aufweist.

Die Lösung der gestellten Aufgabe erfolgt dadurch, daß zwei Schneidkörper radial verschiebbar und feststellbar in Aufnahmeschlitzen des Werkzeugskopfes geführt sind, die gegeneinander gestellt und im Bereich des Aufnahmeschlitzes aneinander anliegen, und daß die Verstellbewegung der Schneidkörper über eine um die Längsachse des Werkzeuges drehbar angeordnete Wippe erfolgt, die mit stirnseitig angebrachten und in axialer Richtung weisenden Steuerbolzen in zugeordnete Ausnehmungen der Schneidkörper eingreifen.

Mit der Anordnung von zwei radial auswärts weisenden Schneidkörpern ergibt sich der wesentliche Vorteil, daß die Schneidkörper sich in ihrem Mittenbereich gegenseitig abstützen und so den Zerspanungsdruck relativ gut aufnehmen ; ferner ist der weitere wesentliche Vorteil, daß die Steuerbolzen, welche die Schneidkörper einwärts und auswärts verstellen, selbst nicht vom Zerspanungsdruck beaufschlagt werden, vollständig frei von dem Zerspanungsdruck bleiben und daher auch keinem Verschleiß unterliegen. Die Schneidkörper stützen sich vielmehr einerseits in ihrem Mittenbereich gegeneinander ab und liegen andererseits an ihrem Außenbereich an Anschlagflächen des Aufnahmeschlitzes im Werkzeugkörper an.

Die radiale Verstellung der Schneidkörper erfolgt hierbei über eine als Wippe bezeichnete zylindrischen Welle, an deren einer Stirnseite die Steuerbolzen angeordnet sind, wobei die Wippe in der Innenbohrung einer gehäusefesten Führungshülse drehbar gelagert ist und von dem Schaft des Werkzeuges drehangetrieben ist.

Bei der Drehung der Wippe durch Drehantrieb des Schaftes führen also die Steuerbolzen eine kurbelschleifenartige (exzentrische) Drehbewegung aus, wodurch die Schneidkörper entweder radial auswärts aus dem Aufnahmeschlitz im Werkzeugkopf verstellt werden und die gewünschte Anfräsung an der Vorder- oder Rückseite der Durchgangsbohrung anbringen, während, wenn der Schaft in der anderen Drehrichtung angetrieben wird, die Steuerbolzen die Schneidkörper radial einwärts verstellen, so daß das Werkzeug durch die Durchgangsbohrung hindurchfahren kann.

Der Schaft ist hierbei über Walzendrucklager drehbar im gehäusefesten Mantel des Werkzeuges gelagert und ist lediglich um einen bestimmten Schwenkwinkel begrenzt im Mantel schwenkbar.

Die Schwenkwinkelbegrenzung des Schafts im Mantel erfolgt dadurch, daß drehfest mit der Innenbohrung des Mantels ein als Kreissegment ausgebildeter Verdrehanschlag befestigt ist, der stirnseitige Anschlagflächen aufweist, an die ein Keil zum Anschlag bringbar ist, der in einer radialen Nut des Schaftes angeordnet ist. Beim Anschlag des Keiles an die eine Anschlagfläche des Verdrehanschlags werden also die Schneidkörper radial auswärts aus ihrem Aufnahmeschlitz im Werkzeugkörper geschoben und führen die geforderte Anfräsung aus, während beim Anschlag des Keiles an die gegenüberliegende Anschlagfläche des Verdrehanschlages die Schneidkörper im Aufnahmeschlitz des Werkzeugkopfes verschwinden und der Werkzeugkopf die Durchgangsbohrung durchfahren kann.

Um Anfräsungen verschiedenen Durchmessers schnell durchführen zu können, wird es bevorzugt, wenn die Führungshülse zusammen mit der Wippe und den Schneidkörpern leicht auswechselbar am Werkzeugkörper gehalten sind. Dies wird dadurch erreicht, daß die Führungshülse mit Hilfe von Schrauben mit dem Mantel des Werkzeuges verbunden ist, und ferner daß die Wippe lösbar in der Art einer Steckkupplung mit dem Schaft verbunden ist, so daß sie zwar in axialer Richtung herausgezogen werden kann, in radialer Richtung jedoch mit dem Schaft gekuppelt ist.

Zum Anbringen von Anfräsungen unterschiedlichen Durchmessers wird dann einfach die Führungshülse von dem Mantel abgeschraubt und kann zusammen mit der Wippe von dem Werkzeug abgezogen werden, wodurch die Steckkupplung zwischen der Wippe und dem Schaft gelöst wird. Es wird dann eine andere Führungshülse, z. B. größeren Durchmessers mit anderen Schneidkörpern eingesetzt und in der beschriebenen Weise die Wippe über die Steckkupplung mit dem Schaft verbunden, und ferner die Führungshülse über die Befestigungsschrauben mit dem Mantel, so daß jetzt nach diesem einfachen Wechsel Anfräsungen größeren Durchmessers angebracht werden können.

Eine weitere Ausführungsform eines Fräswerkzeuges nach der vorliegenden Erfindung sieht vor, daß der Schaft im Mantel des Fräswerkzeuges über Kugellager (wie beim erstbeschriebenen Ausführungsbeispiel) gelagert ist, daß aber der Schaft einen radialen Ansatz größeren Durchmessers aufweist, an dem in Längsrichtung vorne und hinten die Kugellager anliegen, so daß mit dieser Anordnung größere axiale Kräfte vom sich drehenden Schaft auf den Mantel des Fräswerkzeuges übertragen werden können.

Dieses Ausführungsbeispiel zeichnet sich ferner dadurch aus, daß eine Verdrehbremse (Bremseinrichtung) vorgesehen ist, die zwischen dem Ein- und Ausfahren der Messer eine gebremste Zwischenstellung gewährleistet, so daß beispielsweise beim Einfahren die Messer nicht aus ihrer eingefahrenen Stellung zurückschnellen und unbeabsichtigt aus dem Werkzeugkopf 50 herausragen, was zu einem fehlerhaften Bearbeitungsvorgang führen würde.

Umgekehrt sorgt die Verdrehbremse dafür, daß, wenn die Messer in ihrer voll ausgefahrenen Stellung am Werkzeugkopf sind, daß nicht unbeabsichtigt die Messer durch zu schnelles Verdrehen des Schaftes in Bezug zum Mantel des Fräswerkzeuges unbeabsichtigt wieder in den Messerkopf eingefahren werden und hierdurch ein fehlerhafter Fräsvorgang eingeleitet wird. Das Zurückschnellen des Schaftes in Bezug zum Mantel des Fräswerkzeuges wird durch das Anschlagen von einem mit dem Schaft verbundenen Keil an zugeordneten Anschlagflächen eines segmentförmigen Verdrehanschlages bewirkt, der mit einem Mantel des Fräswerkzeuges verbunden ist. Die Verdrehbremse schaltet beim Reversieren der Drehrichtung des Schaftes, d. h. zwischen dem Einfahren und dem Ausfahren der Messer (d. h. zwischen dem Anschlagen des Keils an der einen oder anderen Anschlagfläche des Verdrehanschlages) eine gebremste Zwischenstellung dazwischen, so daß ein zu hartes und abruptes Anschlagen und eine damit verbundene, unbeabsichtigte Verstellung der Messer im Messerkopf des Fräswerkzeuges vermieden wird.

Weitere Merkmale der Erfindung sind Gegenstand der übrigen Unteransprüche.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen offenbarten Angaben und Merkmale, insbesondere die in den Zeichnungen dargestellte, räumliche Ausbildung werden als erfindungswesentlich — wie im Schutzbegehren festgelegt — beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen :

Figur 1 schematisch gezeichneter Schnitt durch ein Werkstück mit mehreren, hintereinanderliegenden Durchgangsbohrungen,

Figur 2 Mittenlängsschnitt durch ein Werkzeug nach der Erfindung,

Figur 2a Schnitt gemäss der Linie IIa-IIa in Figur 2,

Figur 3 Schnitt gemäss der Linie III-III in Figur 2,

Figur 4 Schnitt durch den Gewindestellring des Werkzeugs,

Figur 5 Draufsicht auf den Gewindestellring,

Figur 6 Seitenansicht des Schaftes,

Figur 7 Schnitt gemäss der Linie VII-VII durch den Schaft,

Figur 8 Schnitt gemäss der Linie VIII-VIII in Figur 7,

Figur 9 Seitenansicht der werkzeugkopfnahen Seite des Schaftes,

Figur 10 Schnitt durch den Verdrehanschlag,

Figur 11 Seitenansicht des Verdrehanschlages,

Figur 12 Seitenansicht der Wippe,

Figur 13 Stirnansicht der werkzeugkopfnahen Seite der Wippe,

Figur 14 Seitenansicht der werkzeugkopfnahen Seite der Wippe,

Figur 15 Schnitt durch die Führungshülse,

Figur 16 Seitenansicht mit teilweisem Schnitt durch die Führungshülse,

Figur 17 Mittenlängsschnitt durch ein Werkzeug nach einer zweiten Ausführungsform gemäss der Erfindung,

Figur 18 Schnitt gemäss der Linie XVIII-XVIII in Figur 17,

Figur 19 Teilseitenansicht eines Positionierbügels gemäss Figur 24,

Figur 20 Schnitt durch die Positioniervorrichtung in Figur 24,

Figur 21 Schnitt gemäss der Linie XXI-XXI in Figur 17 mit Darstellung der Verdrehbremse,

Figur 22 Draufsicht auf den Bremsbügel in Richtung des Pfeiles XXII in Figur 21,

Figur 23 Schnitt gemäss der Linie XXIII-XXIII in Figur 21,

Figur 24 Seitenansicht des Fräswerkzeuges gemäss Figur 2 oder Figur 17 in fertig montierter Stellung im Aufnahmekonus einer Antriebsmaschine mit eingerasteter Positioniervorrichtung.

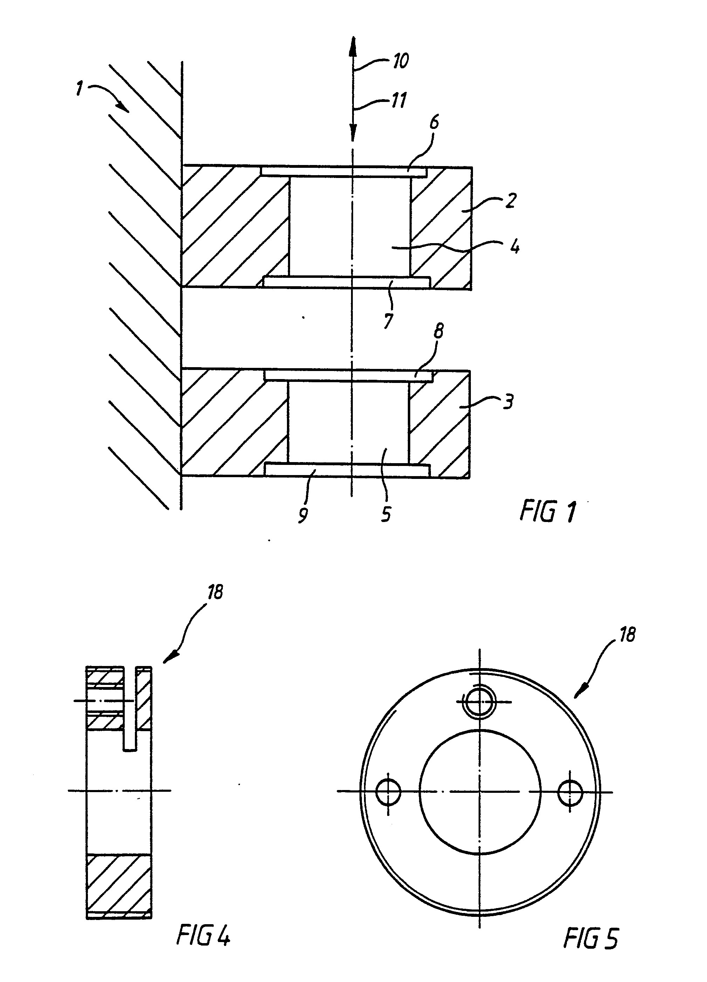

Als Anwendungsbeispiel für ein Fräswerkzeug wird auf Figur 1 hingewiesen, wo an einem Werkstück 1 zwei Teile 2, 3 getrennt voneinander angebracht sind. Jedes Teil 2, 3 weist eine Durchgangsbohrung 4, 5 auf. Aufgabe des erfindungsgemässen Werkzeuges ist es nun, auf einfache Weise im vorwäts- und rückwärtsgehenden Betrieb die Anfräsungen 6, 7, 8, 9 in Form von Planflächen anzubringen, und zwar sollen diese Anfräsungen 6, 7, 8, 9 in beliebigen wählbaren Durchmessergrößen angebracht werden. Statt der Anbringung von Planflächen können auch Radiusflächen mit konkaven oder konvexen Formen oder auch Fasen mit beliebigem Winkel oder jeder anderen Form angebracht werden.

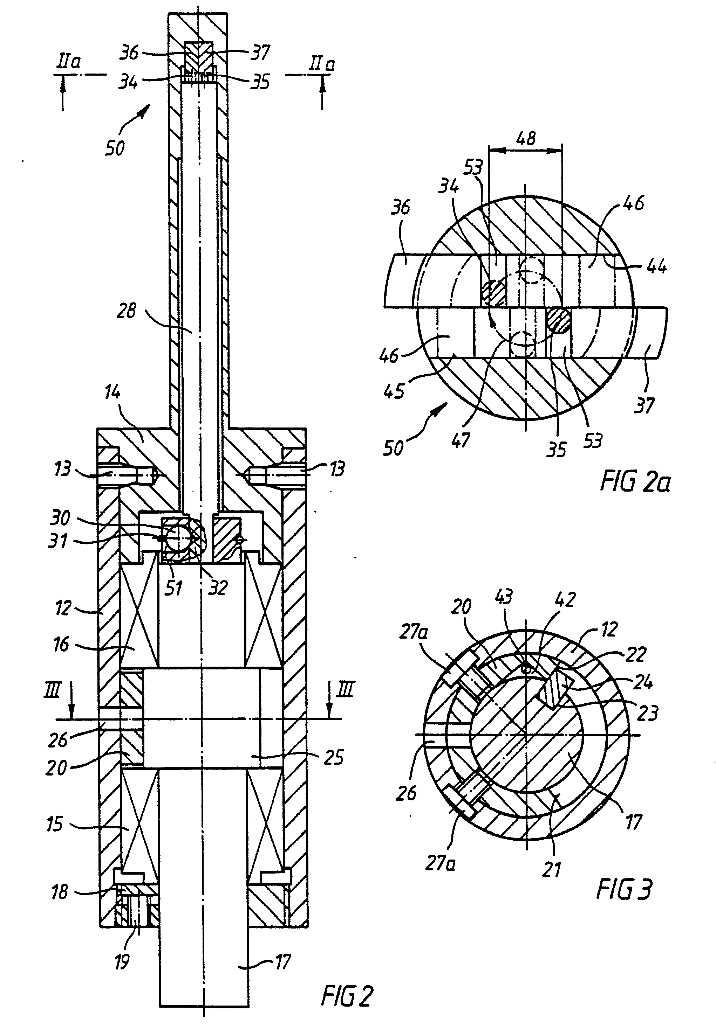

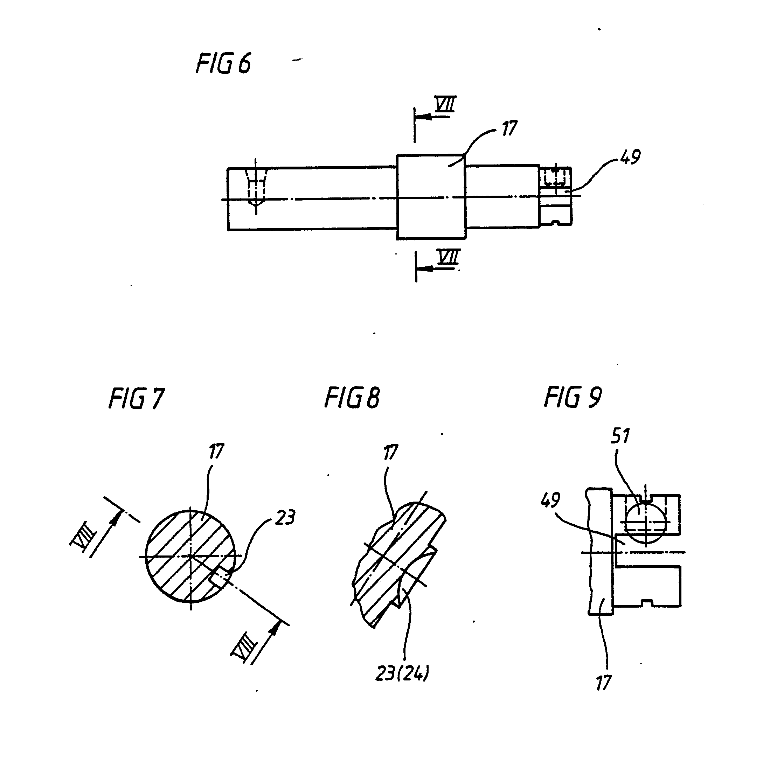

Das Fräswerkzeug nach Figur 2 und 3 besteht aus einem gehäusefesten Mantel 12, der über Befestigungsschrauben 13, die um 30° konisch an ihren unteren Enden ausgebildet sind, mit einer Führungshülse 14 drehfest verbunden ist. An der Innenseite des Mantels 12 sind zwei Walzendrucklager 15, 16 in gegenseitigem Abstand angeordnet, die einen drehbaren Schaft 17 aufnehmen. Am hinteren Ende des Mantels 12 ist ein Gewindestellring 18 angebracht, der in Verbindung mit der Feststellschraube 19 es gestattet, daß die Walzendrucklager 15, 16 bezüglich des Schaftes 17 spielfrei axial eingestellt werden können.

Der Schaft 17 weist einen mittigen Ansatz 25 vergrößerten Durchmessers auf, um als axialer Anschlag für die Walzendrucklager 15, 16 zu dienen. Das werkzeugkopfnahe Walzendrucklager 16 schlägt mit seiner Stirnseite an der inneren Stirnseite der Führungshülse 14 an.

Im Bereich des Ansatzes 25 vergrößerten Durchmessers ist an der Innenseite drehfest mit dem Mantel 12 ein Verdrehanschlag 20 verbunden, wobei in entsprechenden Bohrungen des Mantels Befestigungsschrauben 27a sitzen, die mit ihrem bolzenseitigen Ende in zugeordnete Befestigungsbohrungen 27 des Verdrehanschlages 20 eingreifen.

Es ist ferner eine genau positionierte Bohrung 26 im Verdrehanschlag 20 angebracht, die mit einer gleichartigen Bohrung im Bereich des Mantels 12 fluchtet. In beide Bohrungen wird ein nicht näher dargestellter Positionierstift eingesetzt, so daß die Winkellage des Verdrehanschlages 20 in Bezug zum Mantel 12 genau festgelegt ist. Wichtig ist, daß der Winkel zwischen den Anschlagflächen 21, 22 des als Kreissegment ausgebildeten Verdrehanschlages 20 genau 110° beträgt, was dem Verdrehwinkel des Schaftes 17 entspricht, wobei die Schneidkörper von der eingefahrenen Stellung in die ausgefahrene Stellung und zurück radial verstellbar sind.

Zur Schwenkwinkelbegrenzung zwischen dem Schaft 17 und dem Verdrehanschlag 20 ist in dem Schaft 17 eine radiale Nut 23 eingearbeitet, in die ein Keil 24 eingesetzt ist. Der Keil ragt hierbei in radialer Richtung über den Außenumfang des Schaftes 17 vor, so daß er zusammen mit den Anschlagflächen 21, 22 des Verdrehanschlages 20 die Schwenkwinkelbegrenzung für den Drehantrieb des Schaftes 17 bildet. Damit er leicht in die Nut eingesetzt werden kann, ist die Bodenfläche der Nut halbrundförmig ausgebildet (Figur 8).

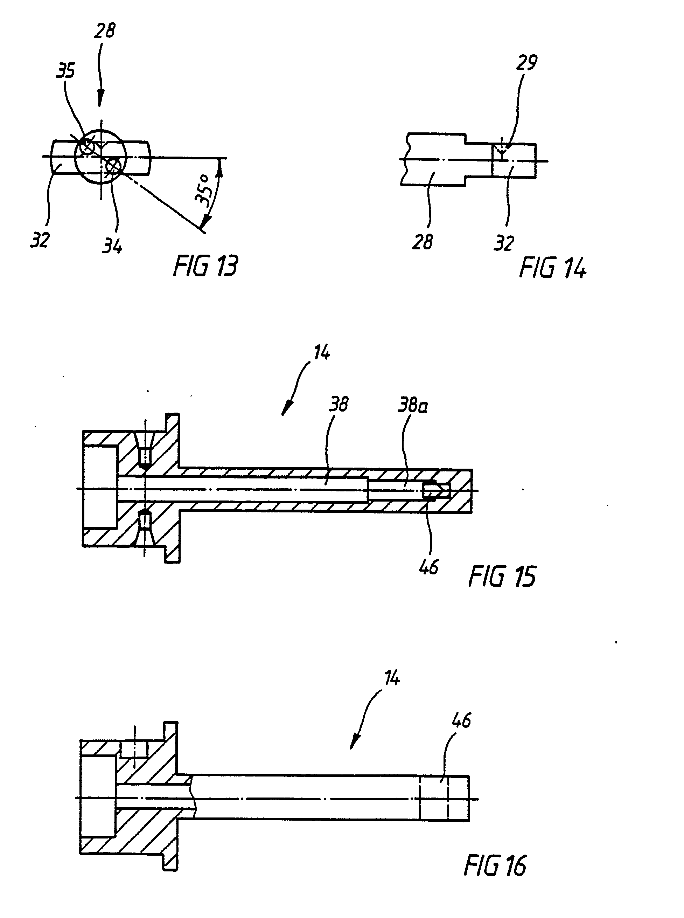

Die werkzeugkopfnahe Stirnseite des Schaftes 17 weist gemäss Figur 6 und 9 eine schlitzförmige Aufnahme 49 auf, in welche die Befestigungslappen 32 an der rückwärtigen Stirnseite einer als Wippe 28 bezeichneten Welle eingreifen. Die Wippe ist hierbei in der Art einer Steckkupplung in der Aufnahme 49 des Schaftes gelagert. Dies erfolgt gemäss Figur 2 dadurch, daß gemäss Figur 9 eine Lagerbohrung 51 für den Einsatz einer Rastkugel 30 vorgesehen ist, wobei die Lagerbohrung 51 die Aufnahme 49 schneidet. Die Rastkugel wird an ihrem Außenumfang von einem Federring 31 eingefasst, der die Rastkugel federbelastet in den Bereich der Aufnahme 49 einpresst. Im Bereich des Befestigungslappens 32 der Wippe 28 ist eine Positionierbohrung 29 (Figur 14) angebracht, in welche die Rastkugel 30 eingreift.

Auf diese Weise wird eine lösbare Steckverbindung (Steckkupplung) zwischen der Wippe 28 und der Stirnseite des Schaftes 17 geschaffen. Die Wippe 28 ist hierbei drehfest mit dem Schaft 17 verbunden, jedoch in axialer Richtung abziehbar. Die Wippe 28 besteht aus einer Welle, die drehbar in der Mittenlängsbohrung 38 der Führungshülse 14 gelagert ist, wobei die Mittenlängsbohrung 38 im Vergleich zu der sich daran anschliessenden Mittenlängsbohrung 38a einen vergrößerten Durchmesser aufweist, so daß die Wippe 28 nur im Bereich der Mittenlängsbohrung 38a der Führungshülse 14 drehbar gelagert ist.

An der werkzeugkopfnahen Stirnseite der Wippe 28 sind zwei gegenüberliegende, einen gegenseitigen Abstand aufweisende Steuerbolzen 34, 35 angeordnet.

Die Steuerbolzen greifen gemäss Figur 2a in schlitzförmige Ausnehmungen 53 in den Schneidkörpern 36, 37 ein.

Die Schneidkörper 36, 37 sind hierbei gegeneinander gestellt in einem radialen Aufnahmeschlitz 46 im Werkzeugkopf 50 angeordnet. In ihrem inneren Bereich liegen die Schneidkörper 36, 37 aneinander, während sie in ihrem Außenbereich an zugeordneten Anschlagflächen 44, 45 des Werkzeugkopfes 50 im Bereich des Aufnahmeschlitzes 46 anliegen. Hierdurch erfolgt eine optimale Kraftübertragung des Zerspanungsdruckes. Der Zerspanungsdruck wird hierbei von den inneren Anschlagflächen 44, 45 der Führungshülse 14 aufgenommen und wird über die Führungshülse 14 auf den Mantel 12 eingeleitet und über den Positionierstift innerhalb der Bohrung 26 auf den Verdrehanschlag 20, sowie über den Keil 24 auf den Schaft 17 übertragen. Hierdurch wird vermieden, daß der Zerspanungsdruck von den Steuerbolzen 34, 35 aufgenommen wird, die hierdurch leicht verschleissen können. Der Zerspanungsdruck wird also nicht auf die Steuerbolzen 34, 35 übertragen, die deshalb allein nur die radiale Verstellung der Schneidkörper 36, 37 übernehmen. Die Steuerbolzen 34, 35 greifen also in der Art von Kurbelzapfen in die schlitzförmigen Ausnehmungen 53 der Schneidkörper 36, 37 ein.

Wird die Wippe 28 durch Verdrehung des Schaftes 17 verdreht, dann bewegen sich die Steuerbolzen 34, 35 auf einem Kreisbogen 47 und gelangen hierdurch von ihrer gestrichelt eingezeichneten Stellung in die Stellung, welche in ausgezogenen Linien in Figur 2a dargestellt ist. Die Schneidkörper 36, 37 werden hierbei um den Verstellweg 48 verstellt.

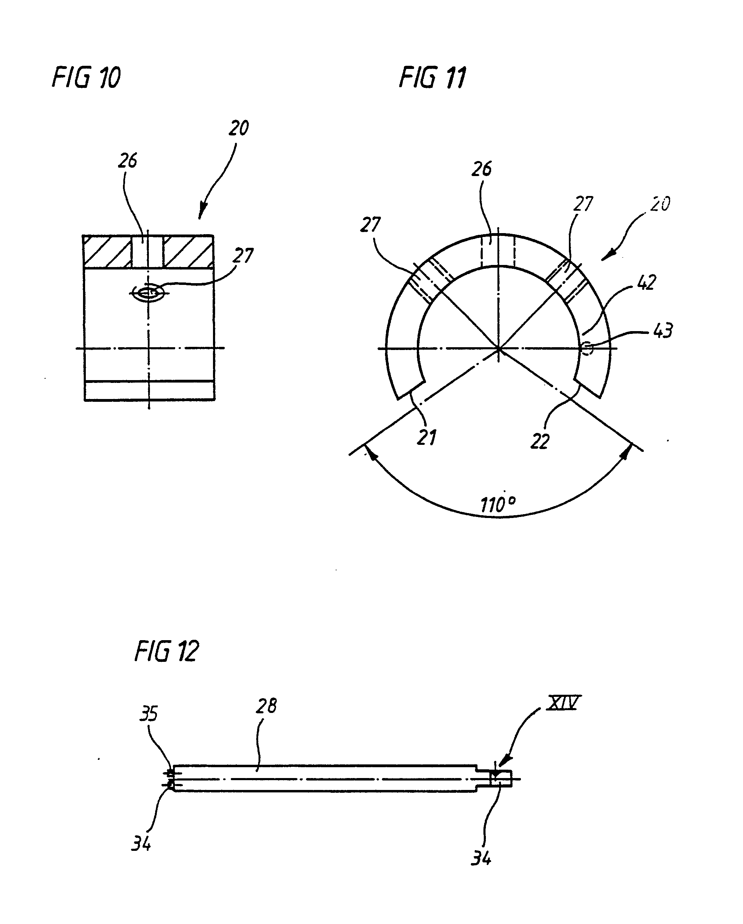

In Figur 3 ist noch wesentlich, daß der Keil 24 zu einer Linie, welche durch den Steuerbolzen 34, 35 geht (vgl. Figur 13), im Winkel von 35° versetzt ist. Dies ergibt in Verbindung mit dem Winkel von 110° beim Verstellanschlag gemäss Figur 11 und Figur 3 die geforderte Verstellbewegung.

In manchen Anwendungsfällen ist es erwünscht, daß die Verdrehung des Schaftes 17 arretierbar ist, so daß ein Anschlagen des Keils 24 an den Anschlagflächen 21, 22 des Verdrehanschlages 20 nicht zu einem Zurückschlagen des Schaftes 17 führt, was vor allem bei schnellen Drehgeschwindigkeiten der Fall sein könnte. Hierzu ist es vorgesehen, daß gemäß Figur 3 der Schaft 17 verklemmbar mit dem Mantel 12 ausgebildet ist. Die Verklemmung erfolgt hierbei dadurch, daß im Bereich des Verdrehanschlages 20 eine konisch ausgebildete Klemmausnehmung 42 im Innenumfang eingearbeitet ist, in der eine Klemmwalze 43 einliegt. Die Klemmwalze 43 klemmt sich dann in dem konischen Zwickel der Klemmausnehmung 42 in Richtung zum Außenumfang des Schaftes 17 fest, wenn der Keil 24 an der Anschlagfläche 22 anschlägt. Die gleiche Verklemmung ist auch beim Anschlag des Keils 24 an der gegenüberliegenden Anschlagfläche 21 in analoger Weise gegeben.

In einer weiteren, nicht zeichnerisch dargestellten Ausführungsform ist es statt der Verklemmung zwischen dem Schaft 17 und dem Mantel 12 in den Endlagen auch vorgesehen, eine entsprechende Verrastung zwischen dem Schaft 17 und dem Verdrehanschlag 20 vorzusehen.

Eine solche Verrastung kann entweder federbelastet oder magnetisch erfolgen. Beim letztgenannten Ausführungsbeispiel wird im Bereich der Anschlagflächen 21, 22, wenn der Keil 24 dort anschlägt, ein entsprechender magnetischer Kontakt zwischen zwei entgegengesetzt polarisierten Dauermagneten hergestellt, von denen der eine Dauermagnet drehfest mit dem Schaft 17 und der andere Dauermagnet drehfest mit dem Verdrehanschlag 20 oder dem Mantel 12 verbunden ist.

Mit dem beschriebenen Fräswerkzeug ist es damit auf einfache Weise möglich, im VorwärtsFräsbetrieb (Pfeilrichtung 11 — Figur 1) oder im Rückwärts-Fräsbetrieb (Pfeilrichtung 10 — Figur 1) die entsprechenden Anfräsungen 6, 7, 8, 9 im Bereich der Durchgangsbohrungen 4, 5 anzubringen.

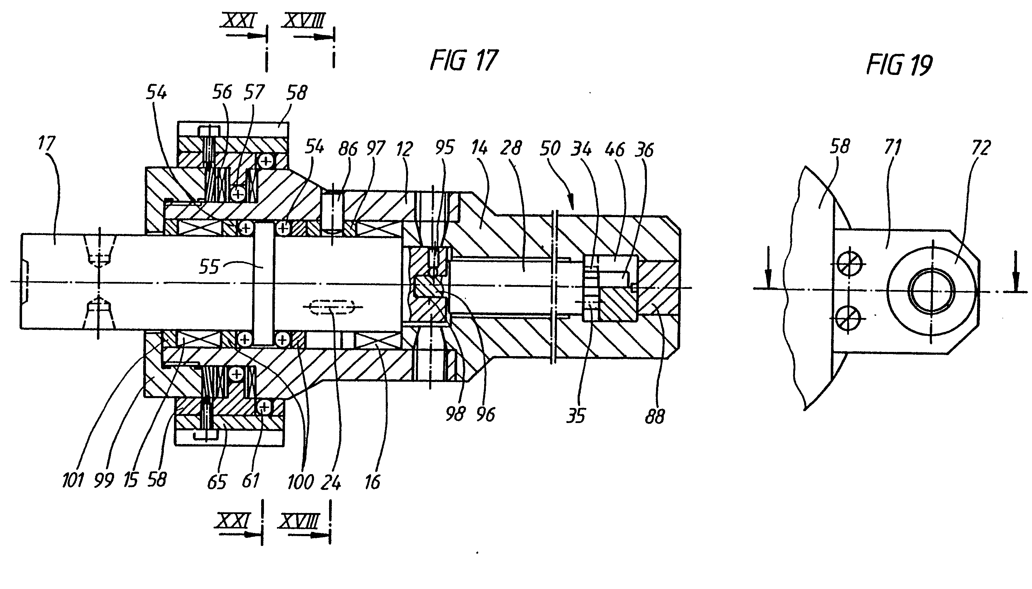

Bei der in Figur 17 gezeigten zweiten Ausführungsform eines Fräswerkzeuges nach der Erfindung werden gleiche Teile mit gleichen Bezugszeichen, wie in den vorhergehenden Zeichnungen, versehen. Der Schaft 17 des Fräswerkzeuges ist dadurch drehbar im Mantel 12 gehalten, daß neben den vorher bereits schon bei Figur 2 vorhandenen Walzendrucklagern 15, 16, die im wesentlichen radiale Kräfte aufnehmen, noch zusätzliche Kugellager 54 vorhanden sind, die im wesentlichen axiale Kräfte aufnehmen. Die axialen Kräfte des Schaftes 17 werden auf den Mantel 12 dadurch übertragen, daß werkstoffeinstückig mit dem Schaft 17 ein Ringflansch 55 vergrößerten Durchmessers angeformt ist, an den sich in Längsrichtung gesehen vorne und hinten die Kugellager 54 anlegen.

Die Kugellager 54 sind vorne und hinten von entsprechenden Zwischenscheiben 100 eingefasst. Die Wippe 28 ist in ähnlicher Weise — wie beim Ausführungsbeispiel nach Figur 2 — über eine Steckkupplung mit der Stirnseite des Schaftes 17 verbunden. Hierbei ist in der Stirnseite des Schaftes 17 eine Aufnahmebohrung 98 angeordnet, in welche der stirnseitige Zapfen 96 der Wippe 28 eingreift. Die Arretierung des Zapfens 96 in der Aufnahmebohrung 98 des Schaftes 17 erfolgt durch eine Rastkugel, die mit einer Klemmschraube 95 in eine V-förmige Ausnehmung des Zapfens 96 der Wippe 28 eingedrückt wird.

Wie bei dem vorher beschriebenen Ausführungsbeispiel nach den Figuren 2ff ist die Wippe 28 drehbar in der Führungshülse 14 des Werkzeugkopfes 50 gelagert, wobei die Steuerbolzen 34, 35 der Wippe 28 wiederum in zugeordnete Ausnehmungen der Messer 36, 37 eingreifen, wie dies anhand der Figur 2a beschrieben wurde.

Die Stirnseite des Werkzeugkopfes 50 ist durch einen lösbar angebrachten Abschlußzapfen 88 gebildet.

Die Einstellung des axialen Spiels der Kugellager 57 erfolgt über eine Abschlußscheibe 101, die stirnseitig am Innenumfang eines Gewindestellrings 99 anliegt. Der Gewindestellring 99 ist in Bezug zum Mantel 12 verdrehbar und zwar ist innen eine Tellerfeder 56 vorgesehen, welche das axiale Spiel des Kugellagers 57 und des gesamten, darüber angeordneten, Bremsbügels 58 einstellt. Der Bremsbügel ist damit über das axiale einstellbare Kugellager 57 drehbar in Bezug zum Mantel 12 gehalten.

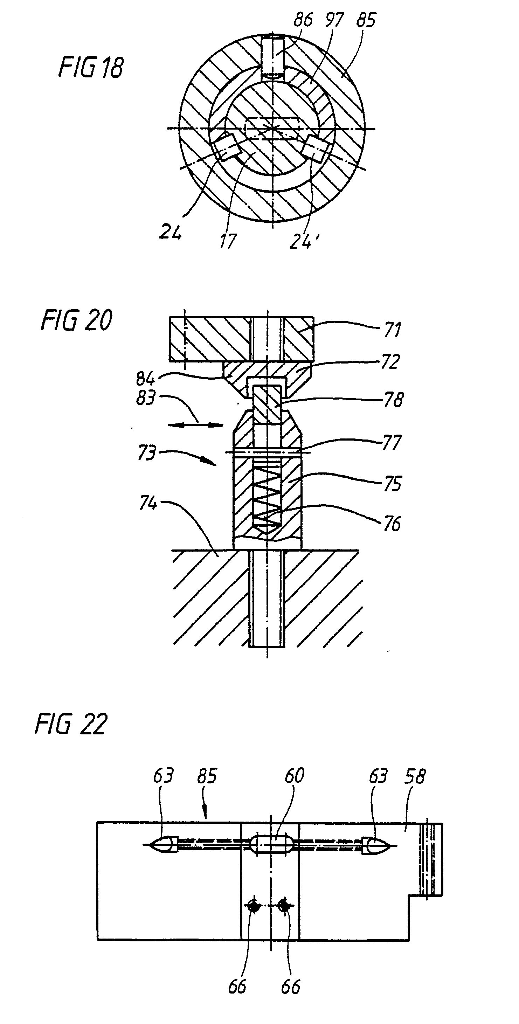

Nachfolgend wird die dem Bremsbügel 58 zugeordnete Verdrehbremse beschrieben, die dafür sorgt, daß beim Drehrichtungswechsel des Schaftes 17·in Bezug zum Mantel 12 die Messer 36, 37 nicht unbeabsichtigt aus ihrer eingestellten Lage durch zu hartes Anschlagen des Keils 24 an den zugeordneten Anschlagflächen eines Verdrehanschlages 97 (vgl. Figur 18) verstellt werden.

Der Schaft 17 ist gemäss Figur 18 mit einem Keil 24 versehen, der radial über den Außenumfang des Schaftes 17 hervorsteht und der mit zugeordneten Anschlagflächen des segmentförmigen Verdrehanschlages 97 verbunden ist, der seinerseits über eine Pass-Schraube 86 fest mit dem Mantel 12 verbunden ist.

In Figur 18 ist als Variante ein zweiter Keil 24' gezeichnet. Es ist aber stets nur entweder der Keil 24 oder der Keil 24' vorhanden. Im Falle des Vorhandenseins des Keils 24 sind in der eingezeichneten Stellung die Messer 36, 37 im Werkzeugkopf 50 eingefahren, während in dem Falle des Vorhandenseins des Keils 24' in der eingezeichneten Stellung die Messer 36, 37 aus dem Werkzeugkopf 50 ausgefahren sind.

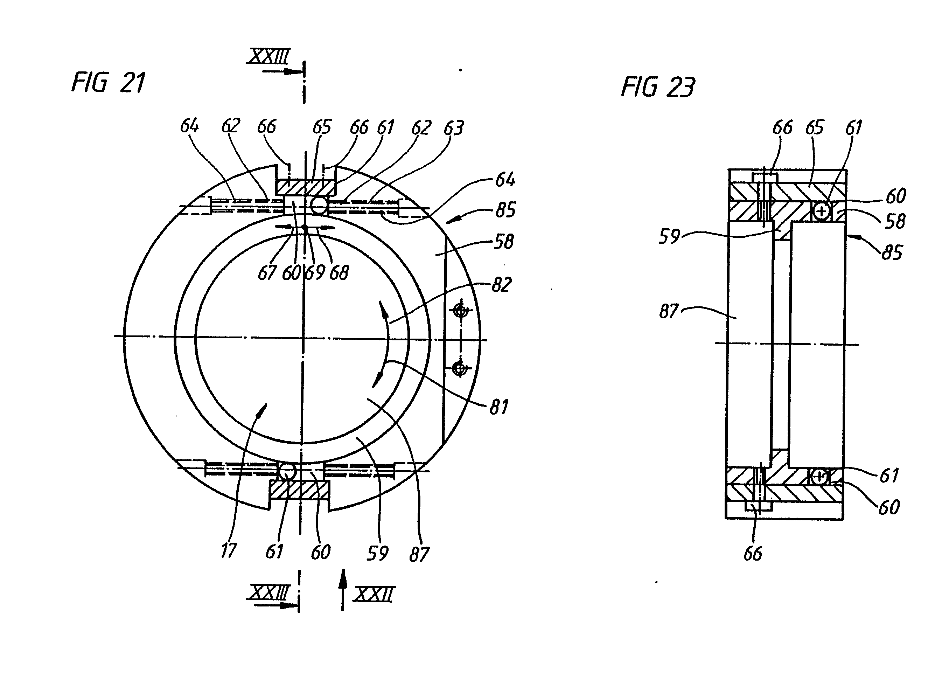

Die nachfolgend anhand der Figuren 21 bis 23 beschriebene Verdrehbremse verhindert, daß bei einem abrupten Anschlagen des Keils 24 an die zugeordneten Anschlagflächen des Verdrehanschlages 97 die Messer unbeabsichtigt aus ihrer einmal eingestellten Lage verstellt werden.

Die Verdrehbremse wird hierbei durch den Bremsbügel 58 gebildet, der gemäss den Figuren 21 bis 23 aus einem hohlzylindrischen Teil mit einer zentrischen Innenbohrung 87 besteht. Der Bremsbügel weist hierbei einen radial einwärts gerichteten Ringflansch 59 verringerten Durchmessers auf, mit dem er auf dem zugeordneten Kugellager 57 aufsitzt und dort drehbar gelagert ist. Im Bereich außerhalb des Ringflansches 59 sind am Innenumfang des Bremsbügels 58 zwei einander gegenüberliegende Bohrungen 60 angebracht, die gemäss Figur 21 tangential zum Umfang der Innenbohrung 87 verlaufen und diese Bohrung 87 zum Teil schneiden. In jeder Bohrung 60 ist jeweils eine Bremskugel 61 angebracht und dort axial verschiebbar. Die Stirnseiten der Bohrung 60 sind jeweils durch Federstifte 62 gebildet, die axial in der Verlängerung der Bohrung 60 in einer dazu fluchtenden Bohrung 63 im Bremsbügel 58 angebracht sind. In den einander gegenüberliegenden Bohrungen 63 sind jeweils Federn 64 angeordnet, welche die Federstifte 62 mit Federkraft vorspannen, so daß sie um ein geringes Maß in die lichte Weite der Bohrung 60 von deren Stirnseite her hineinragen.

Die jeweilige Bremskugel 61 kommt in der einen oder anderen Endlage jeweils zur Anlage an der Stirnseite des zugeordneten Federstiftes 62.

Die Bohrungen 63 sind in Richtung zum Außenumfang des Bremsbügels durch nicht näher dargestellte Verschlußschrauben verschlossen.

Die jeweils radial nach außen gerichtete Seite der Bohrung 60 wird durch eine feste Bremsplatte 65 gebildet, die mit Hilfe von zwei Schrauben 66 (vgl. Figur 23) mit dem Bremsbügel 58 verbunden ist. Auch diese Bremsplatte 65 liegt tangential zum Innenumfang der Innenbohrung 87 und liegt parallel zur Längsachse der jeweiligen Bohrung 63.

Durch Verdrehung des Mantels 12, der in der Innenbohrung 87 sitzt in Bezug zum Bremsbügel 58, wird die jeweilige Bremskugel 61 entweder in die eine Endlage in Pfeilrichtung 67 oder in die andere Endlage in Pfeilrichtung 68 in der Bohrung 60 bewegt. Die Position 69 ist die Bremsstellung. Die obere Bremskugel 61 wird hierbei in Pfeilrichtung 67 dann verstellt, wenn der Mantel 12 in Pfeilrichtung 82 in Bezug zum Bremsbügel verdreht wird, während umgekehrt die Bremskugel 61 in Pfeilrichtung 68 verstellt wird, wenn der Mantel 12 in Pfeilrichtung 81 in Bezug zum Bremsbügel 58 verdreht wird.

Beim Übergang der Bremskugel 61 von Pfeilrichtung 68 in Pfeilrichtung 67 gelangt die Bremskugel 61 bei Position 69 unter die Bremsplatte 65 und drückt dort mit hohem Reibungsschluß auf den in der Innenbohrung 87 angeordneten Mantel 12 des Fräswerkzeuges, weil die tangentiale Bohrung 69 den Innenumfang 87 teilweise schneidet. Die Bremskugel 61 befindet sich daher oben in Reibungsschluß mit der Bremsplatte 65 und unten in Reibungsschluß mit dem Mantel 12. Die Drehung des Mantels 12 wird hierbei beim Übergang von Pfeilrichtung 68 zu Pfeilrichtung 67 kurzzeitig abgebremst.

Die in Figur 21 unten gezeichnete Kugel hat die gleiche Funktion, wie die oben gezeichnete Bremskugel 61, so daß der Einfachheit halber nur die obere Bremskugel 61 beschrieben wurde.

Die durch den Bremsbügel 58 geschaffene Verdrehbremse 85 bewirkt also, daß bei jedem Drehrichtungswechsel des Schaftes 17 in Bezug zum Mantel 12 die jeweilige Bremskugel 61 unter der Bremsplatte 65 hindurch muß, um in ihre andere Endlage zu gelangen. Der Schaft 17 erhält dadurch einen kurzen Bremsruck und läuft dann sofort in der anderen Drehrichtung weiter.

Dieser Bremsruck hat den Zweck, ein Federn der Messer 36, 37 bei Verdrehung der Wippe 28 über den Schaft 17 zu vermeiden. Jedem Messer 36, 37 wird also stets nur die eine oder die andere Endlage zugeordnet, ohne daß es dazwischenliegende, unzulässige Zwischenlagen gibt.

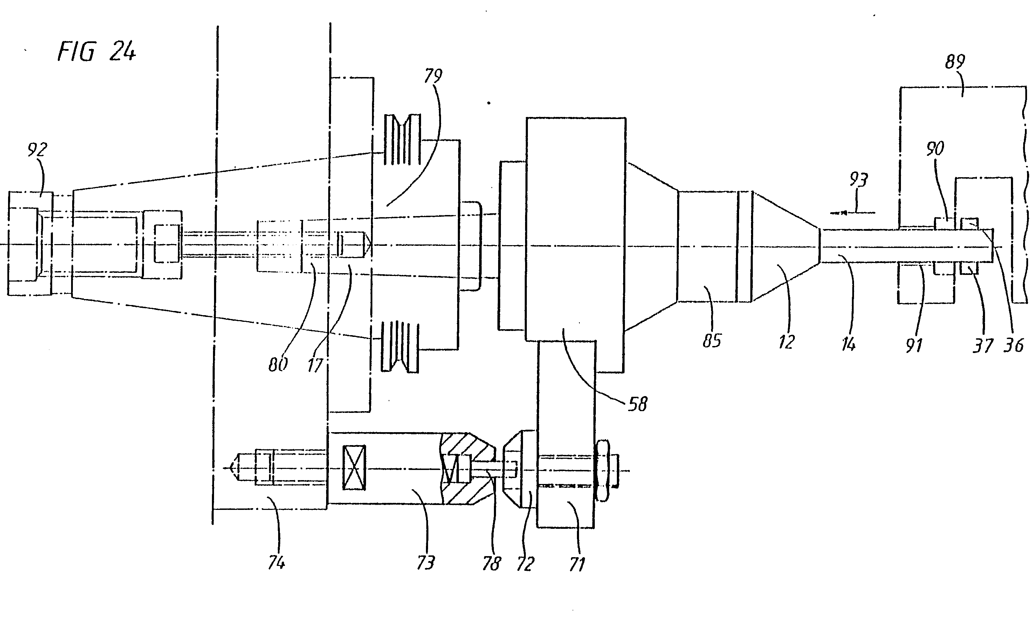

Nachfolgend wird die dem Bremsbügel 58 zugeordnete Positioniervorrichtung 73 geschildert, die dafür sorgt, daß der Bremsbügel 58 sich in drehfestem Eingriff mit der Werkzeugmaschine 92 (Figur 24) befindet. Der Bremsbügel 58 ist hierbei mit einem radial auswärts stehenden Posi- tionierbügel 71 verbunden. Die Positioniervorrich- tung 73 hat den Zweck, beim axialen Ein- und Ausspannen des Aufnahmekonus der Werkzeugmaschine 92 das Fräswerkzeug mit seinem Schaft 17 und dem daran angeordneten Spannkonus 80 in eine bestimmte Drehlage in Bezug zum Aufnahmekonus 79 der Werkzeugmaschine 92 zu bringen.

Dies erfolgt nach der Erfindung über einen federbelasteten Bolzen 78, der axial verschiebbar in einer Positionieraufnahmebuchse 75 entgegen der Kraft einer Feder 76 gehalten ist, wobei das Herausfallen des Bolzens 78 durch einen eine Bohrung des Bolzens 78 durchsetzenden Spannstift 77 vermieden wird.

Die Positionieraufnahmebuchse 75 ist mit einem Gewindebolzen verbunden, der in ein zugeordnetes Gewinde mit einem Teil 74 des Maschinengehäuses verbunden ist.

Der federbelastete Bolzen 78 rastet in eine Positionierbuchse 72 ein, die fest über einen Gewindestift mit dem Positionierbügel 71 gemäss Figur 20 verbunden ist.

Um das Einrasten des Bolzens 78 in den Pfeilrichtungen 83 in die Positionierbuchse 72 zu erleichtern, ist diese im Umfangsbereich der zugeordneten Aufnahmebohrung mit einer Schräge 84 versehen.

In umgekehrter Weise kann die Positionierbuchse 72 am Teil 74 des Maschinengehäuses befestigt sein, während die Positioniervorrichtung 73 am Positionierbügel 71 befestigt sein kann.

Das in Figur 17 gezeigte Werkzeug ist auf dem Spannkonus 80 mit dem Schaft 17 montiert. Die Positioniervorrichtung 73 sei mit dem Bolzen 78 noch nicht in die Positionierbuchse 72 am Positionierbügel 71 eingerastet. Beim Anlauf der Werkzeugmaschine 92 dreht die Positioniervorrichtung 73 eine bestimmte Winkelumdrehung leer durch, bis der Bolzen 78 in Gegenüberstellung zur Positionierbuchse 73 gelangt und dort einrastet. Der Bremsbügel 58 ist damit fest mit dem Teil 74 des Maschinengehäuses verbunden, während nur noch der Schaft 17 in der einen oder anderen Drehrichtung angetrieben wird, um die Messer ein- oder auszufahren und im übrigen der gesamte Mantel 12 mit den ein- oder ausgefahrenen Messern umläuft, um die in Figur 1 gezeigten Fräsvorgänge zu bewerkstelligen.

Als weiteres Beispiel ist in Figur 24 ein Arbeitsvorgang gezeigt, wo die Führungshülse 14 durch eine Durchgangsbohrung 91 mit eingefahrenen Messern 36, 37 hindurchgetreten ist, wobei sich an die Durchgangsbohrung 91 eine Aussparung 90 vergrößerten Durchmessers im Werkstück 89 anschließt. Durch entsprechende Verdrehung des Schaftes 17 über die Werkzeugmaschine 92 werden nun die Messer 36, 37 ausgefahren und der gesamte Mantel 12 des Fräswerkzeuges wird drehangetrieben, so daß die Aussparung 90 im Werkstück 89 ausgefräst wird, wenn sich das drehangetriebene Fräswerkzeug in Pfeilrichtung 93 nach hinten bewegt.

**Patentansprüche**

1. Fräswerkzeug mit in axialer Vorwärts- und Rückwärtsrichtung gehender Vorschubbewegung zum Anbringen von Planflächen vergrößerten Durchmessers im Bereich von Durchgangsbohrungen (4, 5) mit einem über einen Schaft (17) drehantreibbaren Werkzeugkopf (50), der zwei radial nach außen weisende in einem Aufnahmeschlitz (46) angeordnete Schneidkörper (36, 37) aufweist, die in der einen Drehrichtung des Werkzeuges ihren größten radialen Abstand von der Mittenlängsachse und in der anderen Drehrichtung ihren kleinsten radialen Abstand von der Mittenlängsachse aufweisen, dadurch gekennzeichnet, daß die Schneidkörper (36, 37) separat radial in entgegengesetzter Richtung verschiebbar und feststellbar in dem Aufnahmeschlitz (46) des Werkzeugkopfes (50) geführt sind, die gegeneinander gestellt und im Bereich des Aufnahmeschlitzes (46) aneinander anliegen und daß die Verstellbewegung der Schneidkörper (36, 37) über eine um die Längsachse des Werkzeuges drehbar angeordnete Wippe (28) erfolgt, die mit stirnseitig angebrachten und in axialer Richtung weisenden Steuerbolzen (34, 35) in zugeordneten Ausnehmungen (53) der Schneidkörper (36, 37) eingreifen.

2. Fräswerkzeug nach Anspruch 1, dadurch gekennzeichnet, daß die Wippe (28) aus einer zylindrischen Welle besteht, an deren einer Stirnseite die Steuerbolzen (34, 35) angeordnet sind, und daß die Wippe (28) in der Innenbohrung einer gehäusefesten Führungshülse (14) drehbar gelagert ist (Fig. 2, 12, 17).

3. Fräswerkzeug nach Anspruch 2, dadurch gekennzeichnet, daß die Wippe (28) mit ihrer den Steuerbolzen (34, 35) gegenüberliegenden Stirnseite axial lösbar und drehantreibbar (Steckkupplung) an der werkzeugkopfnahen Stirnseite des Schaftes (17) angeordnet ist (Fig. 2, 17).

4. Fräswerkzeug nach Anspruch 1, dadurch gekennzeichnet, daß der Schaft (17) über Walzendrucklager (15, 16, 54, 57) drehbar im gehäusefesten Mantel (12) des Werkzeuges gelagert ist und daß der Schaft (17) lediglich um einen bestimmten Schwenkwinkel begrenzt im Mantel (12) drehbar ist (Fig. 2, 11, 17).

5. Fräswerkzeug nach Anspruch 4, dadurch gekennzeichnet, daß die Schwenkwinkelbegrenzung des Schaftes (17) im Mantel (12) dadurch gebildet ist, daß drehfest mit der Innenbohrung des Mantels (12) ein als Kreissegment ausgebildeter Verdrehanschlag (20) befestigt ist, der stirnseitige Anschlagflächen (21, 22) aufweist, an die ein Keil (24) zum Anschlag bringbar ist, der in einer radialen Nut (23) des Schaftes (17) angeordnet ist (Fig. 3, 18).

6. Fräswerkzeug nach einem der Ansprüche 1-5, dadurch gekennzeichnet, daß zwischen dem Schaft (17) und dem gehäusefesten Mantel (12) eine Verdrehbremse (42, 43, 85) angeordnet ist, welche die Verdrehlage des Schaftes (17) in der einen oder anderen Endlage bis zur Reversierung des Schaftes (17) festhält (Fig. 3, 21-23).

7. Fräswerkzeug nach Anspruch 6, dadurch gekennzeichnet, daß die Verdrehbremse (85) aus einem Bremsbügel (58) besteht, der mit seiner Innenbohrung (87) über Kugellager (57) drehbar auf dem Mantel (12) des Fräswerkzeuges aufsitzt, daß am Innenumfang der Innenbohrung (87) zwei gegenüberliegende, in ihrer Längsrichtung tangential zum Außenumfang des Schaftes (17) ausgerichtete Bohrungen (60) angeordnet sind, in deren lichtem Querschnitt jeweils eine Bremskugel (61) axial bewegbar ist, daß die Bohrung (60) mindestens zum Teil den Außenumfang des Schaftes (17) schneidet und daß die Bohrung (60) radial auswärts von einer Bremsplatte (65) abgedeckt ist, welche ebenfalls zum Teil die Bohrung (60) schneidet und mit einem Teil in den lichten Querschnitt der Bohrung (60) hineinragt (Fig. 21-23).

8. Fräswerkzeug nach Anspruch 7, dadurch gekennzeichnet, daß der Bremsbügel (58) mit einem radial von dem Fräswerkzeug abstehenden Positionsbügel (71) verbunden ist, der mit einem Teil (74) am Maschinengehäuse verrastbar ist (Fig. 19, 20, 24).

## Claims

1. Milling tool with axial forward and backward feed motion for producing plane surfaces of increased diameter in the region of through holes (4, 5) by means of a rotatably via a shaft (17) driven tool head (50) with two radial outward pointing within a receiving slot (46) arranged cutting bodies (36, 37) which in one direction of rotation are positioned in a maximum radial distance from the rotational axis and in the other direction in a minimum distance from the rotational axis, characterized in that the cutting bodies (36, 37) are radially in opposing directions displaceable guided and lockable within the receiving slot (46) of the tool head (50), being arranged opposite pointing and in the region of the receiving slot (46) adjoined side-by-side, and that the adjusting motion is accomplished by means of a rocker (28) arranged rotatable around the longitudinal axis of the tool, provided at its frontal face with steering bolts (34, 35) which engage allotted recesses (53) of the cutting bodies (36, 37).

2. Milling tool as claimed in claim 1, characterized in that the rocker means (28) consists of a cylindrical shaft provided with steering bolts (34, 35) at one frontal face and that the rocker means (28) is rotatable supported within an inner bore of a housing-fixed guide sleeve (14).

3. Milling tool as claimed in claim 2, characterized in that the rocker means (28) with its frontal face opposite the steering bolt arrangement (34, 35) is arranged axially detachable and adapted to be rotatable driven (plug-in coupling) at the tool head near frontal face of the shaft (17) (Figures 2, 17).

4. Milling tool as claimed in claim 1, characterized in that the shaft (17) is rotatable supported in the housing-fixed casing (12) of the tool by means of roller thrust bearings (15, 16, 54, 57), and that the shaft (17) is rotatable in the casing (12) only within a limited predetermined pivoting angle.

5. Milling tool as claimed in claim 4, characterized in that the pivoting angle limit of the shaft (17) in the casing (12) is formed such in that non-rotationally within the inner bore of the casing (12) a pivoting stop (20) in form of a circular segment is affixed, provided with frontal stopping surfaces (21, 22) against which a key (24) comes to stop which is being arranged in a radial keyway (23) of the shaft (17) (Figures 3, 18).

6. Milling tool as claimed in claims 1 through 5, characterized in that between the shaft (17) and the housing-fixed casing (12) a rotatory motion brake (42, 43, 85) is arranged which will keep the shaft (17) in the one other limiting rotation position until the shaft (17) is being reversed (Figures 3, 21 through 23).

7. Milling tool as claimed in claim 6, characterized in that the rotatory motion brake (85) consists of a brake collar (58) which with its inner bore (87) is rotatable supported on the casing (12) of the milling tool by ball bearings (57), that at the inner circumference of the bore (87) two opposing and in its longitudinal direction tangentially to the outer circumference of the shaft 17 aligned bores (60) are provided in which clear opening cross section in each case a brake ball (61) is axially movable accommodated, that the bore (60) cuts at least part of the outer circumference of the shaft (17), and that the bore (60) is covered radial outwardly by a brake plate (65) which also cut partly the bore (60) and projects with one part of it into the clear opening cross section of the bore (60).

8. Milling tool as claimed in claim 7, characterized in that the brake collar (58) is connected to a radial from the milling tool projecting positioning lever means (71) which is with one part (74) of the machine housing lockable.

## Revendications

1. Outil à fraiser comportant un mouvement axial d'avance vers l'avant et vers l'arrière pour la production de surfaces planes à diamètre agrandi dans des alésages de passages (4, 5) et pourvu d'une tête d'outil (50) actionnée en rotation sur une tige (17), ladite tête présentant deux corps de coupe radiaux (36, 37) tournés vers l'extérieur et disposés dans une rainure de réception (46), lesquels présentent un écartement radial plus grand à partir de l'axe longitudinal central dans un sens de rotation de l'outil et, plus petit dans l'autre sens, caractérisé en ce que les corps de coupe (36, 37) sont guidés séparément, radialement, en direction opposée, en pouvant être mobiles ou bloqués dans la rainure de réception (46) de la tête de l'outil (50), lesdits corps étant placés l'un contre l'autre et ajustés l'un par rapport à l'autre dans la roue de la rainure de réception (46), et en ce que le mouvement de réglage des corps de coupe (36, 37) s'effectue sur une bascule (28), mobile autour de l'axe longitudinal de l'outil et engrenant dans des goujons de commande (34, 35), disposés du côté frontal et dans une direction axiale dans des rainures (53) ménagées dans les corps de coupe (36, 37).

2. Outil à fraiser suivant la revendication 1, caractérisé en ce que la bascule (28) se compose d'un arbre cylindrique, sur lequel sont disposés les goujons de commande (34, 35) d'un côté frontal, et en ce que la bascule (28), mobile, est logée dans l'alésage interne d'un fourreau de guidage (14) (fig. 2, 12, 17).

3. Outil à fraiser suivant la revendication 2, caractérisé en ce que la bascule (28) est disposée axialement et actionnée en rotation de manière débrayable par un organe d'accouplement du côté frontal de la tige (17) proche de la tête de l'outil et qui coopère avec l'extrémité frontale de la bascule qui est opposée à son extrémité portant les goujons de commande (34, 35).

4. Outil à fraiser suivant la revendication 1, caractérisé en ce que la tige (17) est montée dans des paliers à cannelures (15, 16, 54, 57), mobiles dans un boîtier (12) de l'outil, et en ce que la tige (17) est purement et simplement mobile selon un certain angle d'orientation limité dans le boîtier (12) (fig. 2, 11, 17).

5. Outil à fraiser suivant la revendication 4, caractérisé en ce que la limitation de l'angle d'orientation de la tige (17) dans le boîtier (12) est formée de telle façon qu'une butée de torsion (20) en forme de segment de cercle est fermement fixée à l'alésage interne du boîtier (12), ladite butée présentant des surfaces de butée (21, 22) du côté frontal, tandis qu'on prévoit en outre à titre de butée une clavette (24) qui est placée dans une rainure radiale (23) de la tige (17) (fig. 3, 18).

6. Outil à fraiser suivant les revendications 1 à 5, caractérisé en ce qu'un frein de torsion (42, 43, 85) est placé entre la tige (17) et le boîtier (12), lequel retient la position de torsion de la tige (17) dans l'une ou l'autre des positions extrêmes jusqu'au renversement de la tige (17) (fig. 3, 21-23).

7. Outil à fraiser suivant la revendication 6, caractérisé en ce que le frein de torsion (85) se compose d'une bride de freinage (58), qui est montée de manière mobile sur un roulement à billes (57) par son alésage interne (87) en vue de tourner sur le boîtier (12) de l'outil à fraiser, en ce que sur la périphérie intérieure de l'alésage interne (87) sont ménagés deux alésages (60) opposés dans le sens transversal tangentiellement par rapport à la périphérie extérieure de la tige (17), et dans chacun desquels est disposée une bille de freinage (61) mobile axialement, en ce que l'alésage (60) coupe au moins partiellement la périphérie extérieure de la tige (17) et en ce que l'alésage (60) est recouvert radialement vers l'extérieur par une plaque de freinage (65), laquelle coupe également partiellement l'alésage (60) et dont une partie pénètre à l'intérieur de l'alésage (60) (Fig. 21-23).

8. Outil à fraiser suivant la revendication 7, caractérisé en ce que la bride de freinage (58) est liée avec une oreille de position (71) qui s'étend radialement à partir de l'outil à fraiser, ladite bride de freinage pouvant être reliée à une partie (74) du bâti de la machine (fig. 19, 20, 24).

FIG 1

FIG 4

FIG 5

FIG 2

FIG 2a

FIG 3

FIG 6

VII

17

49

VII

FIG 7

17

23

VII

VII

FIG 8

17

23(24)

FIG 9

51

49

17

FIG 10

FIG 11

FIG 12

FIG 13

FIG 14

FIG 15

FIG 16

5

FIG 17

FIG 19

0 129 116

FIG 18

86 97 85

24 17 24'

FIG 20

71
72
84
83
78
73
77
74
75
76

FIG 22

63 85 60 63 58

66 66

7

FIG 21

FIG 23

0 129 116

FIG 24

0 129 116